# FASCICULE DE BREVET EUROPEEN

(11) **EP 4 326 573 B1**
(45) Date de publication et mention de la délivrance du brevet: **30.04.2025**
(21) Numéro de dépôt: 22723673.4
(22) Date de dépôt: 20.04.2022
(51) Int. Cl.: B60K 11/08, F01P 7/10

(54) **DISPOSITIF D'OBTURATION D'ENTREE D'AIR DE FACE AVANT DE VEHICULE AUTOMOBILE**
VORRICHTUNG ZUM ABDICHTEN EINES LUFTEINLASSES EINER VORDERSEITE EINES KRAFTFAHRZEUGS
DEVICE FOR SEALING AN AIR INLET OF A FRONT FACE OF A MOTOR VEHICLE

(30) Priorité: 22.04.2021 FR 2104227
(43) Date de publication de la demande: 28.02.2024
(73) Titulaire: VALEO SYSTEMES THERMIQUES, 78320 Le Mesnil Saint-Denis (FR)
(72) Inventeur: MINERO RAMALES, Victor Manuel, 78322 Le Mesnil-Saint-Denis Cedex (FR); VACCA, Frederic, 78322 Le Mesnil-Saint-Denis Cedex (FR); ARAB, Karim, 78322 Le Mesnil-Saint-Denis Cedex (FR)
(74) Mandataire: Valeo Systèmes Thermiques
(86) Numéro de dépôt international: PCT/EP2022/060467
(87) Numéro de publication internationale: WO 2022/223649

(56) Documents cités:
- EP-A1- 3 109 083
- WO-A1-2016/097589
- WO-A1-2019/205650
- WO-A2-2012/010279
- DE-A1- 102012 000 173
- DE-A1- 102014 103 667
- FR-A1- 3 052 712
- US-A1- 2017 144 710
- US-B1- 10 730 384

## Description

La présente invention concerne un dispositif d'obturation et plus précisément un dispositif d'obturation d'entrée d'air de face avant de véhicule automobile.

Les faces avant de véhicules automobiles sont généralement composées de deux entrées d'air principales dites voie haute et voie basse, séparées par une poutre parechoc. Derrière cette poutre parechoc sont généralement placés les échangeurs de chaleur du véhicule automobile, comme par exemple celui utilisé pour la climatisation de l'habitacle et/ou encore celui utilisé pour le refroidissement du moteur

Il est également connu de disposer, dans le trajet d'air passant par les entrées d'air principales, plus généralement la voie basse, un cadre support comportant une multiplicité de volets montés pivotants autour d'axes parallèles et propres à prendre une multiplicité de positions angulaires différentes, comprises entre une position d'ouverture et une position d'obturation, sous l'action de moyens de commande appropriés. Les différents volets comprennent généralement à une de leurs extrémités un bras de levier relié à une bielle commune. Cette bielle commune est entraînée en mouvement de translation par un actionneur et contrôle ainsi l'ouverture et la fermeture synchrone des volets.

On obtient ainsi un dispositif d'obturation s'apparentant à une jalousie qui permet d'ajuster le débit d'air traversant les entrées d'airs et arrivant aux échangeurs de chaleur. Il est ainsi possible d'optimiser l'efficacité de ces échangeurs de chaleur en fonction des besoins en faisant varier la quantité d'air qu'ils reçoivent. De plus, à grande vitesse, les volets en position d'obturation permettent de diminuer le coefficient de traînée du véhicule et ainsi améliorent l'aérodynamisme dudit véhicule.

Néanmoins, ce type de dispositif d'obturation peut ne pas être adapté notamment lorsque les volets ne sont pas disposés parallèlement les uns aux autres, par exemple dans une volonté esthétique de la part du constructeur. En effet, dans ce cas de figure, il est important d'avoir une synchronicité de l'ouverture et de la fermeture des volets ce que ne peut assurer une liaison à une bielle commune lorsque les volets ne s'ouvrent pas parallèlement les uns des autres

Par ailleurs, d'autres exemples de réalisation de dispositifs d'obturation sont fournis par les documents US10730384B1 et WO2016/097589A1.

Un des buts de la présente invention est donc de remédier au moins partiellement aux inconvénients de l'art antérieur en proposant un dispositif d'obturation amélioré et permettant un contrôle synchrone de l'ouverture et de la fermeture des volets quelle que soit leur disposition au sein du cadre support.

La présente invention concerne donc un dispositif d'obturation d'entrée d'air de véhicule automobile, ledit dispositif d'obturation comportant un cadre support comportant une face avant, destinée à être exposée à un flux d'air entrant, et une face arrière opposée à la face avant, ledit cadre support comportant au moins un orifice traversant, chaque orifice traversant comportant un ensemble d'obturation comportant au moins deux volets complémentaires et mobiles chacun autour d'un axe de pivotement respectif entre une position d'obturation, dans laquelle l'orifice traversant est obturé par complémentarité des au moins deux volets, et une position d'ouverture, dans laquelle le flux d'air entrant peut traverser l'orifice traversant, les volets s'ouvrant de sorte à faire saillie de la face arrière du cadre support en position d'ouverture,
le dispositif d'obturation comportant en outre un système d'ouverture synchrone des volets, caractérisé en ce que
ledit système d'ouverture comportant :
   - un élément suspendu disposé en face arrière du cadre support et mobile entre une position rapprochée du cadre support et une position éloignée du cadre support, ledit élément suspendu étant relié à chacun des volets de sorte qu'en position rapprochée, les volets sont en position d'obturation et qu'en position éloignée, les volets sont en position d'ouverture,
   - un dispositif d'actionnement configuré pour déplacer l'élément suspendu entre la position rapprochée et la deuxième position éloignée.

Selon un aspect de l'invention, les axes de pivotement des volets d'un ensemble d'obturation sont disposés dans un même plan.

Selon un autre aspect de l'invention, au sein d'un même ensemble d'obturation au moins deux axes de pivotement de volets sont disposés de part et d'autre de l'orifice traversant.

Selon un autre aspect de l'invention, au sein d'un même ensemble d'obturation, les axes de pivotement des volets sont disposés en périphérie de l'orifice traversant.

Selon un autre aspect de l'invention, au sein d'un même ensemble d'obturation, le bord libre de chaque volet qui est distal à l'axe de pivotement, couvre une partie d'une zone centrale de l'orifice traversant en position d'obturation.

Selon un autre aspect de l'invention, le système d'ouverture des volets comporte au moins un dispositif de guidage pour guider l'élément suspendu en translation entre sa position rapprochée et sa position éloignée du cadre support.

Selon un autre aspect de l'invention, le dispositif de guidage comporte :
- un organe creux disposé sur le cadre support, le creux dudit organe s'étendant selon un axe parallèle au mouvement de l'élément suspendu, et
- une tige de guidage insérée dans l'organe creux de sorte à pouvoir coulisser dans ledit organe creux et dont une extrémité est reliée à l'élément suspendu.

Selon un autre aspect de l'invention, la liaison entre l'élément suspendu et un volet comporte une bielle de liaison fixée à une première extrémité au volet par une liaison pivot et fixée à une deuxième extrémité à l'élément suspendu par une autre liaison pivot.

Selon un autre aspect de l'invention, le dispositif d'actionnement comporte au moins un actionneur linéaire.

Selon un autre aspect de l'invention, le dispositif d'actionnement comporte :
- au moins un premier arbre disposé sur la face arrière du cadre support sur un premier côté de l'au moins un ensemble d'obturation, ledit au moins un premier arbre étant relié à un actionneur de sorte à le mettre en rotation,
- au moins un deuxième arbre disposé sur la face arrière du cadre support sur un deuxième côté de l'au moins un ensemble d'obturation, opposé au premier côté,
- au moins un moyen de transmission de la rotation du premier arbre au deuxième arbre,
- au moins un moyen de conversion de la rotation des premier et deuxième arbres en mouvement de translation de l'élément suspendu.

Selon un autre aspect de l'invention, le moyen de transmission de la rotation du premier arbre au deuxième arbre comporte un premier bras de levier porté par le premier arbre et un deuxième bras de levier porté par le deuxième axe, les extrémités des premier et deuxième bras de levier étant reliées l'une à l'autre par une bielle.

Selon un autre aspect de l'invention, le moyen de transmission de la rotation du premier arbre au deuxième arbre comporte une courroie crantée reliant les premier et deuxième arbres.

Selon un autre aspect de l'invention, le moyen de transmission de la rotation du premier arbre au deuxième arbre comporte un pignon porté par chacun des premier et deuxième arbres, lesdits pignons étant reliés par une chaîne de transmission.

Selon un autre aspect de l'invention, le moyen de transmission de la rotation du premier arbre (9a) au deuxième arbre est disposé de sorte à être dissimulé derrière un élément de structure du cadre support.

Selon un autre aspect de l'invention, le moyen de conversion de la rotation des premier et deuxième arbres en mouvement de translation de l'élément suspendu comporte :
- une manivelle portée par un des premier ou deuxième arbres,
- un organe de liaison reliée à une ses extrémités à l'élément suspendu et reliée à la manivelle à son extrémité opposée.

Selon un autre aspect de l'invention, l'organe de liaison est une bielle comportant une liaison articulée avec la manivelle et une liaison articulée avec l'élément de structure.

Selon un autre aspect de l'invention, l'organe de liaison est une liaison pivot-glissière entre la manivelle et l'extrémité d'une tige de l'élément suspendu, ladite extrémité de la tige comportant une glissière s'étendant dans un plan perpendiculaire à l'axe de rotation de l'arbre.

Selon un autre aspect de l'invention, l'élément suspendu est ajouré à l'aplomb des ouvertures traversantes de sorte à permettre la circulation d'un flux d'air.

Selon un autre aspect de l'invention, le cadre support comporte une pluralité d'orifices traversants en forme de polygone régulier, les ensembles d'obturation comportant un volet triangulaire par côté desdits orifices traversants.

Selon un autre aspect de l'invention, le cadre support comporte, au sein de l'au moins un orifice traversant, une armature sur laquelle les bords des volets reposent en position d'obturation.

D'autres caractéristiques et avantages de l'invention apparaîtront plus clairement à la lecture de la description suivante, donnée à titre d'exemple illustratif et non limitatif, et des dessins annexés parmi lesquels :
[Fig 1] la figure 1 montre une représentation schématique en perspective de la face avant d'un dispositif d'obturation en position d'obturation,
[Fig 2] la figure 2 montre une représentation schématique en perspective de la face arrière d'un dispositif d'obturation en position d'obturation,
[Fig 3] la figure 3 montre une représentation schématique en perspective d'un ensemble d'obturation d'un orifice traversant du cadre support,
[Fig 4] la figure 4 montre une représentation schématique en perspective de la face arrière d'un dispositif d'obturation en position d'obturation avec un système d'ouverture synchrone des volets,
[Fig 5] la figure 5 montre une représentation schématique en coupe et vue de côté du système d'ouverture synchrone des volets avec les volets en position d'obturation,
[Fig 6] la figure 6 montre une représentation schématique en coupe et vue de côté du système d'ouverture synchrone des volets avec les volets en position d'ouverture,
[Fig 7] la figure 7 montre une représentation schématique en coupe et vue de côté d'un moyen de transmission de la rotation du premier arbre au deuxième arbre selon une première position,
[Fig 8] la figure 8 montre une représentation schématique en coupe et vue de côté d'un moyen de transmission de la rotation du premier arbre au deuxième arbre selon une deuxième position,
[Fig 9] la figure 9 montre une représentation schématique en perspective d'une manivelle d'un arbre,
[Fig 10] la figure 10 montre une représentation schématique en coupe et vue de côté d'un moyen de conversion dans une première position selon un premier mode de réalisation,
[Fig 11] la figure 11 montre une représentation schématique en coupe et vue de côté d'un moyen de conversion dans une deuxième position selon le premier mode de réalisation,
[Fig 12] la figure 12 montre une représentation schématique en coupe et vue de côté d'un moyen de conversion dans une première position selon un deuxième mode de réalisation,
[Fig 13] la figure 13 montre une représentation schématique en coupe et vue de côté d'un moyen de conversion dans une deuxième position selon le deuxième mode de réalisation.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la présente description on peut indexer certains éléments ou paramètres, comme par exemple premier élément ou deuxième élément ainsi que premier paramètre et deuxième paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tels ou tels critères.

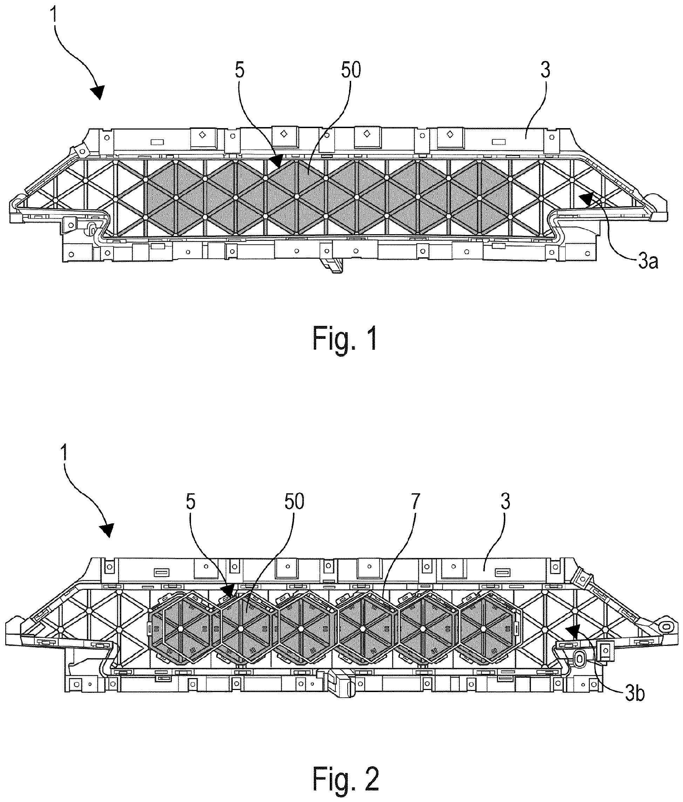

Les figures 1 et 2 montrent un dispositif d'obturation 1 d'entrée d'air de véhicule automobile. Un tel dispositif d'obturation 1 est généralement disposé en face avant du véhicule automobile et permet le contrôle d'un flux d'air entrant, notamment à destination d'échangeurs de chaleur tels que des radiateurs et/ou des évapo-condenseurs. Le dispositif d'obturation 1 permet également d'orienter le flux d'air entrant selon une direction souhaitée, par exemple afin de l'orienter vers les échangeurs de chaleurs. Ce dispositif d'obturation 1 comporte un cadre support 3 comportant une face avant 3a (visible en figure 1) ), destinée à être exposée au flux d'air entrant, et une face arrière 3b (visible en figure 2) opposée à la face avant 3a. La face avant 3a est notamment destinée à faire face à un flux d'air entrant, par exemple en étant orientée vers l'avant du véhicule automobile à l'état monté. La face arrière 3b est quant à elle destinée à faire face à l'intérieur du véhicule automobile à l'état monté, par exemple en faisant face à un ou plusieurs échangeurs de chaleur.

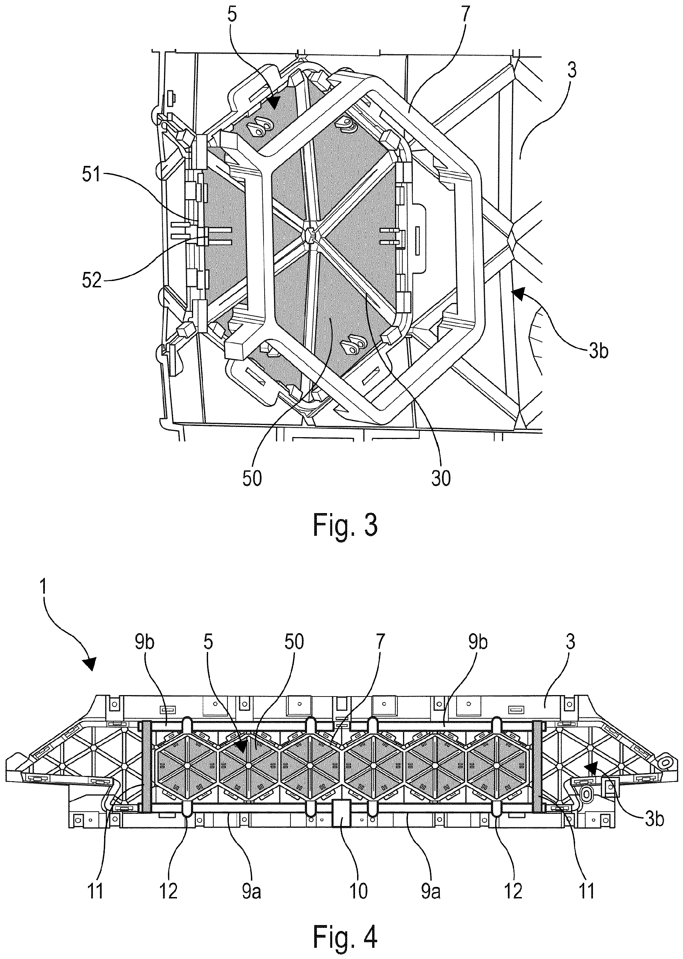

Le cadre support 3 comporte au moins un orifice traversant afin que le flux d'air entrant traverse le dispositif d'obturation. Chaque orifice traversant comportant un ensemble d'obturation 5 comportant au moins deux volets 50 d'obturation complémentaires. Les volets 50 sont mobiles chacun autour d'un axe de pivotement 51 respectif (visible en figure 3) entre une position d'obturation, dans laquelle l'orifice traversant est obturé par complémentarité des au moins deux volets 50, et une position d'ouverture le flux d'air entrant peut traverser orifice traversant. Plus particulièrement, les volets 50 s'ouvrent de sorte à faire saillie de la face arrière 3b du cadre support 3 en position d'ouverture.

Dans l'exemple illustré aux figures 1 et 2, le cadre support 3 comporte une pluralité, ici six, d'orifices traversants, chacun comportant un ensemble d'obturation 5 propre. Sur les figures 1 et 2, les orifices traversants sont disposés bords à bords. Il est cependant tout à fait possible d'imaginer des orifices traversants disposés distants sur le cadre support 3.

Comme le montre plus en détail la figure 3, les axes de pivotement 51 des volets 50 d'un ensemble d'obturation 5 peuvent être plus particulièrement disposés dans un même plan. Au sein d'un même ensemble d'obturation 5, au moins deux axes de pivotement 51 de volets 50 peuvent notamment être disposés de part et d'autre de l'orifice traversant. De plus, les axes de pivotement 51 des volets 50 peuvent être disposés en périphérie de l'orifice traversant. Le bord libre de chaque volet 50, qui est distal à l'axe de pivotement 51, peut couvrir quant à lui une partie d'une zone centrale de l'orifice traversant en position d'obturation. Le cadre support 3 peut également comporter, au sein de l'au moins un orifice traversant, une armature 30 sur laquelle les bords des volets 50 reposent en position d'obturation.

L'orifice traversant a dans l'exemple illustré aux figures 1 à 3 une forme de polygone régulier, plus particulièrement ici un hexagone. Les ensembles d'obturation 5 comportent alors un volet 50 triangulaire par côté desdits orifices traversants.

Le dispositif d'obturation 1 comporte en outre un système d'ouverture synchrone des volets 50 illustré à la figure 4. Ce système d'ouverture comporte tout d'abord un élément suspendu 7 disposé en face arrière 3b du cadre support 3. Par suspendu, on entend ici que l'élément 7 est maintenu à distance de la face arrière 3b du cadre support 3 et est mobile par rapport au cadre support 3. L'élément suspendu 7 est plus particulièrement ajouré à l'aplomb des ouvertures traversantes de sorte à permettre la circulation d'un flux d'air.

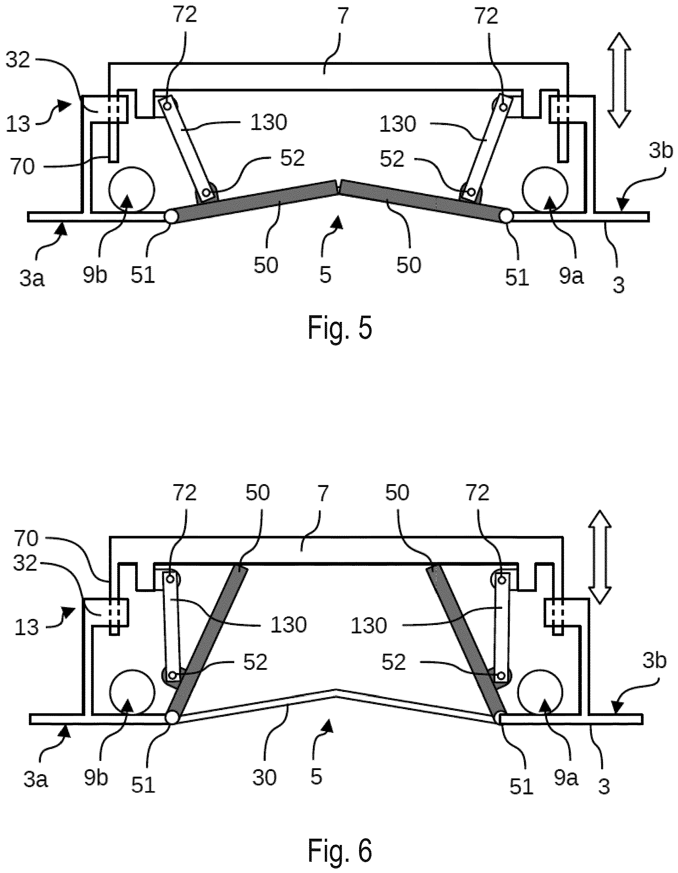

Cet élément suspendu 7 est notamment mobile entre une position rapprochée du cadre support 3 et une deuxième position éloignée du cadre support 3. L'élément suspendu 7 est relié à chacun des volets 50 de sorte qu'en position rapprochée, les volets 50 sont en position d'obturation (voir figure 5) et qu'en position éloignée, les volets 50 sont en position d'ouverture (voir figure 6).

Afin de passer d'une position à une autre, l'élément suspendu 7 peut notamment effectuer une translation rectiligne perpendiculairement au plan défini par le cadre support 3. Afin d'assurer une translation rectiligne, le système d'ouverture des volets 50 peut notamment comporter au moins un dispositif de guidage 13 pour guider l'élément suspendu 7 en translation entre sa position rapprochée et sa position éloignée du cadre support 3. Le dispositif de guidage 13 peut notamment relier l'élément suspendu 7 au cadre support 3 et être configuré pour ne conférer à élément suspendu 7 qu'un seul degré de liberté de mouvement entre sa position rapprochée et sa position éloignée du cadre support 3. Le système d'ouverture des volets peut notamment comporter plusieurs dispositifs de guidage 13 disposés régulièrement autour de l'élément suspendu 7 afin d'assurer un guidage uniforme dudit élément suspendu 7.

Ce dispositif de guidage 13 peut notamment comporter :
- un organe creux 32 disposé sur le cadre support 3, le creux dudit organe 32 s'étendant selon un axe parallèle au mouvement de l'élément suspendu 7, et
- une tige 70 de guidage insérée dans l'organe creux 32 de sorte à pouvoir coulisser dans ledit cylindre creux 32 et dont une extrémité est reliée à l'élément suspendu 7.

La tige 70 de guidage peut par exemple venir de matière avec l'élément suspendu 7. Une autre possibilité est que la tige 70 de guidage soit une pièce rapportée et fixée à l'élément suspendu 7. Le creux de l'organe creux 32 ainsi que la tige 70 de guidage peuvent notamment avoir des formes complémentaires l'une par rapport à l'autre. Par exemple ils peuvent être tous les deux cylindriques ou bien avoir tous les deux une section polygonale complémentaire.

Comme illustré aux figures 5 et 6, la liaison entre l'élément suspendu 7 et un volet 50 peut notamment comporter une bielle 130 de liaison fixée à une première extrémité au volet 50 par une liaison pivot 52 et fixée à une deuxième extrémité à l'élément suspendu 7 par une autre liaison pivot 72. Ces liaisons pivots 52, 72 pivotent plus particulièrement autour d'axes parallèles à l'axe de pivotement 51 du volet 50. L'utilisation d'une bielle 130 rigide et de liaisons pivots 52, 72 permet une transmission directe des forces et ainsi lorsque l'élément suspendu 7 translate vers sa position éloignée (figure 6), il tire les volets 50 les amenant en position d'ouverture et dégageant ainsi l'orifice traversant. Lorsque l'élément suspendu 7 translate vers sa position rapprochée (figure 5) il pousse les volets 50 les amenant en position d'obturation de l'orifice traversant. En position d'obturation des volets 50, l'élément suspendu 7 et la bielle 130 maintiennent les volets 50 en position d'obturation et empêchent ces derniers de s'ouvrir sous la force du vent ou autre arrivant au niveau de la face avant 3a du cadre support 3.

Le système d'ouverture synchrone des volets 50 comporte également un dispositif d'actionnement configuré pour déplacer l'élément suspendu 7 d'une position à une autre. Selon une première variante non illustrée, le dispositif d'obturation 1 peut comporter un actionneur linéaire disposé sur le cadre support 3 et plus particulièrement sa face arrière 3b et relié directement à l'élément suspendu 7 afin de lui imprimer son mouvement de translation.

Selon une deuxième variante illustrée à la figure 4, le dispositif d'actionnement peut comporter au moins un premier arbre 9a disposé sur la face arrière 3b du cadre support 3. Ce premier arbre 9a est disposé sur un premier côté de l'au moins un ensemble d'obturation 5. Ce premier arbre 9a est relié à un actionneur 10 de sorte à le mettre en rotation. Cette rotation peut par exemple être de l'ordre de 90°. Dans l'exemple illustré à la figure 4, le dispositif d'actionnement dispose de deux premiers arbres 9a disposés de part et d'autre d'un actionneur 10 en position centrale sur le cadre support 3. Il est néanmoins tout à fait possible d'imaginer par exemple plusieurs actionneurs 10 disposés à l'extrémité de chaque premier arbre 9a. Une autre possibilité est de n'avoir qu'un seul premier arbre 9a s'étendant sur toute la largeur du cadre support 3 et avec un unique actionneur 10 connecté à une de ses extrémités.

Le dispositif d'actionnement comporte en outre au moins un deuxième arbre 9b disposé sur la face arrière 3b du cadre support 3 sur un deuxième côté de l'au moins un ensemble d'obturation 5, opposé au premier côté. Les premiers arbres 9a sont reliés aux deuxième arbre 9b par au moins un moyen de transmission 11 de la rotation du premier arbre 9a au deuxième arbre 9b. Dans l'exemple illustré à la figure 4, le dispositif d'actionnement comporte deux deuxièmes arbres 9b. Chaque deuxième arbre 9b étant relié à un premier arbre 9a par un moyen de transmission 11 dédié. Il est possible également d'imaginer un mode de réalisation dans lequel plusieurs moyens de transmission 11 relient un premier 9a et un deuxième 9b arbre. La multiplication des moyens de transmission 11 permet notamment une bonne transmission de la rotation et permet également de répartir les forces afin de limiter les contraintes de déformations sur les arbres 9a, 9b. Le moyen de transmission 11 peut notamment transmettre la rotation du premier arbre 9a au deuxième arbre 9b aussi bien dans un sens horaire qu'anti-horaire.

Le moyen de transmission 11 de la rotation d'un premier arbre 9a à un deuxième arbre 9b est de préférence disposé de sorte à être dissimulé derrière un élément de structure du cadre support 3. Dans l'exemple de la figure 4, les moyens de transmission 11 sont disposés à une extrémité des premier 9a et deuxième 9b arbres derrière le cadre support 3. Il est cependant tout à fait possible d'imaginer un mode de réalisation dans lequel les moyens de transmission 11 passent entre deux orifices traversants ou bien au-dessus d'une armature 30 d'un orifice traversant. Cela permet ainsi que le moyen de transmission 11 ne soit pas visible depuis la face avant 3a du cadre support 3.

Selon une première variante non illustrée, le moyen de transmission 11 de la rotation du premier arbre 9a au deuxième arbre 9b peut comporter une courroie crantée reliant les premier 9a et deuxième 9b arbres. Selon une deuxième variante également non illustrée, le moyen de transmission 11 de la rotation du premier arbre 9a au deuxième arbre 9b peut comporter un pignon porté par chacun des premier 9a et deuxième 9b arbres, lesdits pignons étant reliés par une chaîne de transmission.

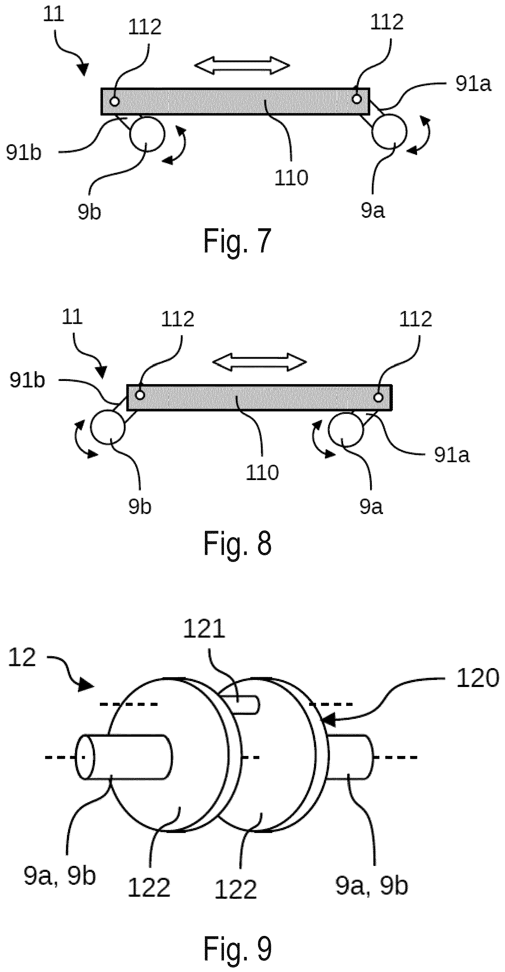

Selon une troisième variante illustrée aux figures 7 et 8, le moyen de transmission 11 de la rotation du premier arbre 9a au deuxième arbre 9b comporte un premier bras de levier 91a porté par le premier arbre 9a et un deuxième bras de levier 91b porté par le deuxième axe 9b. Les extrémités des premier 91a et deuxième 91b bras de levier étant reliées l'une à l'autre par une bielle 112. Cette bielle 112 comporte notamment des liaisons pivots 112 avec les premier 941a et deuxième 91b bras de levier. Les bras de levier 91a, 91b peuvent notamment venir de matière avec leur arbre 9a, 9b respectif. L'arbre 9a, 9b avec ses bras de levier 91a, 91b peuvent par exemple être réalisés par injection au sein d'un moule. Selon un mode de réalisation non représenté, les bras de levier 91a, 92b peuvent se présenter sous la forme de disques concentriques avec l'arbre 9a, 9b et comportant un axe ou un orifice déporté afin d'assurer la liaison pivot avec la bielle 112.

En référence à la figure 4, le dispositif d'actionnement comporte également au moins un moyen de conversion 12 de la rotation des premier 9a et deuxième 9b arbres en mouvement de translation de l'élément suspendu 7. Dans l'exemple illustré à la figure 4, le dispositif d'actionnement comporte plusieurs moyens de conversion 12 répartis régulièrement sur les différents arbres 9a, 9b. Le fait d'avoir plusieurs moyens de conversion 12 permet une poussée et une traction uniforme de l'élément suspendu 7 et limite les forces de torsions et limite les risques de coincement. Les différents moyens de conversion 12 sont également synchrones les uns avec les autres de sorte à exercer une poussée ou une traction uniforme à l'élément suspendu 7.

Ce moyen de conversion 12 est décrit plus en détail aux figures 9 à 13. Le moyen de conversion 12 de la rotation des premier 9a et deuxième 9b arbres en mouvement de translation de l'élément suspendu 7 comporte tout d'abord une manivelle 120 portée par un des premier 9a ou deuxième 9b arbres. Par manivelle 120, on entend ici un axe 121 parallèle à l'axe de rotation du premier 9a ou deuxième 9b arbre et décalé par rapport à celui-ci. L'axe 121 et le premier 9a ou deuxième 9b arbre sont reliés par au moins un bras de levier 122. Dans l'exemple illustré à la figure 9, le bras de levier 122 est un disque concentrique avec l'axe de rotation du premier 9a ou deuxième 9b arbre. L'utilisation d'un disque comme bras de levier 122 permet une meilleure répartition des masses notamment lors de la rotation. Toujours selon l'exemple illustré à la figure 9, la manivelle 120 comporte deux bras de levier 122. Cela permet de dégager l'axe de rotation du premier 9a ou deuxième arbre 9b tout en assurant une continuité dans la rotation entre deux portions d'arbre 9a, 9b séparés par la manivelle 120. Il est néanmoins tout à fait possible d'imaginer un mode de réalisation dans lequel une manivelle 120 en « U » similaire à celle d'un vilebrequin est utilisée ou alors comportant un bras de levier sous une autre forme qu'un disque.

Afin d'assurer une conversion et une transmission synchrone à l'élément suspendu 7, le plan reliant l'axe 121 à l'axe de rotation du premier 9a ou deuxième 9b arbre est le même pour toutes les manivelles 120 d'un même arbre 9a, 9b. Les manivelles 120 du premier arbre 9a sont disposées selon un plan parallèle à celles du deuxième arbre 9b toujours afin d'assurer une bonne synchronicité.

Le moyen de conversion 12 de la rotation des premier 9a et deuxième 9b arbres en mouvement de translation de l'élément suspendu 7 comporte en outre un organe de liaison relié à une ses extrémités à l'élément de structure 7 et reliée à la manivelle 120 à son extrémité opposée.

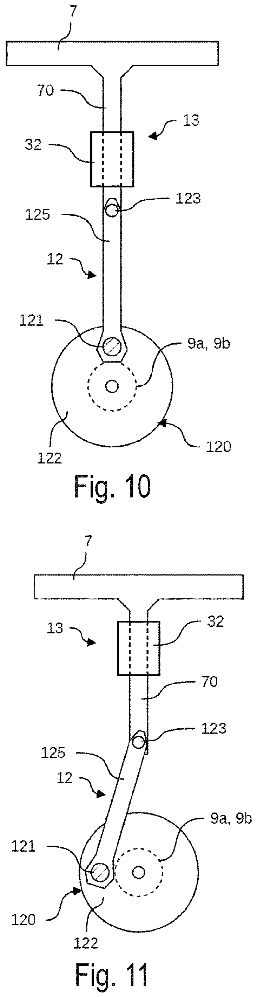

Selon un premier mode de réalisation illustré aux figures 10 et 11, l'organe de liaison peut être une bielle 125 comportant une liaison articulée avec la manivelle 120 et une liaison articulée 123 avec l'élément suspendu 7. La liaison articulée entre la bielle 125 et la manivelle 120 est plus particulièrement une liaison pivot autour de l'axe 121 de ladite manivelle 120. La liaison articulée 123 entre la bielle 125 et l'élément suspendu 7 peut être également une liaison pivot pivotant autour d'un axe parallèle à l'axe de rotation de l'arbre 9a, 9b. Dans l'exemple illustré aux figures 10 et 11 cette liaison articulée 123 est réalisée à l'extrémité de la tige de guidage 70 de l'élément suspendu 7. Il est néanmoins tout à fait possible d'imaginer une variante non illustrée dans laquelle la liaison articulée 123 est réalisée ailleurs sur l'élément suspendu 7.

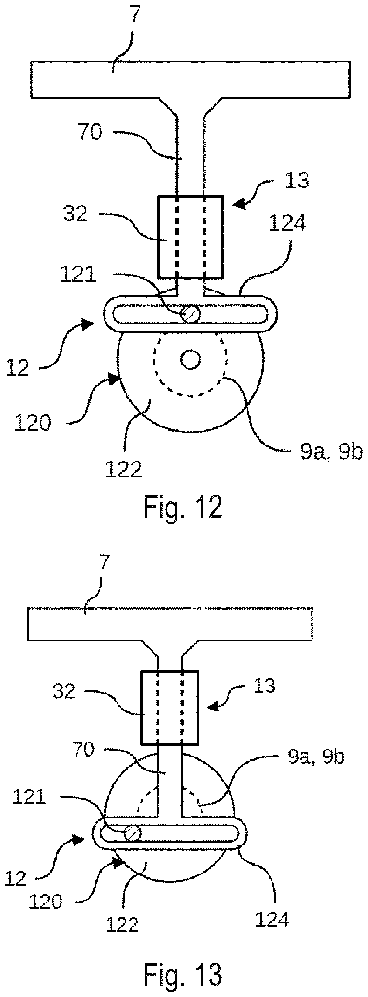

Selon un deuxième mode de réalisation illustré aux figures 12 et 13, l'organe de liaison est une liaison pivot/glissière entre la manivelle 120 et l'extrémité de la tige 70 de l'élément suspendu 7. L'extrémité de la tige 70 comporte une glissière 124 s'étendant dans un plan perpendiculaire à l'axe de rotation de l'arbre 9a, 9b dans laquelle l'axe 121 de la manivelle 120 peut coulisser et tourner. Préférentiellement, la tige 70 peut être la même tige 70 de l'élément suspendu 7 utilisée pour le dispositif de guidage 13.

Ainsi, on voit bien que le dispositif d'obturation 1 permet de par la présence de l'élément suspendu 7 une ouverture et une fermeture synchrone de tous les volets 50 quel que soit leur disposition sur le cadre support 3.

## Revendications

1. Dispositif d'obturation (1) d'entrée d'air de véhicule automobile, ledit dispositif d'obturation (1) comportant un cadre support (3) comportant une face avant (3a), destinée à être exposée à un flux d'air entrant, et une face arrière (3b) opposée à la face avant (3a), ledit cadre support (3) comportant au moins un orifice traversant, chaque orifice traversant comportant un ensemble d'obturation (5) comportant au moins deux volets (50) complémentaires et mobiles chacun autour d'un axe de pivotement (51) respectif entre une position d'obturation, dans laquelle l'orifice traversant est obturé par complémentarité des au moins deux volets (50), et une position d'ouverture, dans laquelle le flux d'air entrant peut traverser l'orifice traversant, les volets (50) s'ouvrant de sorte à faire saillie de la face arrière (3b) du cadre support (3) en position d'ouverture, le dispositif d'obturation (1) comportant en outre un système d'ouverture synchrone des volets (50), **caractérisé en ce que** ledit système d'ouverture comportant :
- un élément suspendu (7) disposé en face arrière (3b) du cadre support (3) et mobile entre une position rapprochée du cadre support (3) et une position éloignée du cadre support (3), ledit élément suspendu (7) étant relié à chacun des volets (50) de sorte qu'en position rapprochée, les volets (50) sont en position d'obturation et qu'en position éloignée, les volets (50) sont en position d'ouverture,
- un dispositif d'actionnement configuré pour déplacer l'élément suspendu (7) entre la position rapprochée et la deuxième position éloignée.

2. Dispositif d'obturation (1) selon la revendication 1, **caractérisé en ce que** le système d'ouverture des volets (50) comporte au moins un dispositif de guidage (13) pour guider l'élément suspendu (7) en translation entre sa position rapprochée et sa position éloignée du cadre support (3).

3. Dispositif d'obturation (1) selon la revendication précédente, **caractérisé en ce que** le dispositif de guidage (13) comporte :
- un organe creux (32) disposé sur le cadre support (3), le creux dudit organe (32) s'étendant selon un axe parallèle au mouvement de l'élément suspendu (7), et
- une tige (70) de guidage insérée dans l'organe creux (32) de sorte à pouvoir coulisser dans ledit organe creux (32) et dont une extrémité est reliée à l'élément suspendu (7).

4. Dispositif d'obturation (1) selon l'une quelconque des revendications précédentes, **caractérisé en ce que** la liaison entre l'élément suspendu (7) et un volet (50) comporte une bielle (130) de liaison fixée à une première extrémité au volet (50) par une liaison pivot (52) et fixée à une deuxième extrémité à l'élément suspendu (7) par une autre liaison pivot (72).

5. Dispositif d'obturation (1) selon l'une quelconque des revendications 1 à 4, **caractérisé en ce que** le dispositif d'actionnement comporte :
- au moins un premier arbre (9a) disposé sur la face arrière (3b) du cadre support (3) sur un premier côté de l'au moins un ensemble d'obturation (5), ledit au moins un premier arbre (9a) étant relié à un actionneur (10) de sorte à le mettre en rotation,
- au moins un deuxième arbre (9b) disposé sur la face arrière (3b) du cadre support (3) sur un deuxième côté de l'au moins un ensemble d'obturation (5), opposé au premier côté,
- au moins un moyen de transmission (11) de la rotation du premier arbre (9a) au deuxième arbre (9b),
- au moins un moyen de conversion (12) de la rotation des premier (9a) et deuxième (9b) arbres en mouvement de translation de l'élément suspendu (7).

6. Dispositif d'obturation (1) selon la revendication 5, **caractérisé en ce que** le moyen de transmission (11) de la rotation du premier arbre (9a) au deuxième arbre (9b) comporte un premier bras de levier (91a) porté par le premier arbre (9a) et un deuxième bras de levier (91b) porté par le deuxième axe (9b), les extrémités des premier (91a) et deuxième (91b) bras de levier étant reliées l'une à l'autre par une bielle (112).

7. Dispositif d'obturation (1) selon l'une quelconque des revendications 5 ou 6, **caractérisé en ce que** le moyen de conversion (12) de la rotation des premier (9a) et deuxième (9b) arbres en mouvement de translation de l'élément suspendu (7) comporte :
- une manivelle (120) portée par un des premier (9a) ou deuxième (9b) arbres,
- un organe de liaison reliée à une ses extrémités à l'élément suspendu (7) et reliée à la manivelle (120) à son extrémité opposée.

8. Dispositif d'obturation (1) selon la revendication 7, **caractérisé en ce que** l'organe de liaison est une bielle (125) comportant une liaison articulée avec la manivelle (120) et une liaison articulée (123) avec l'élément de structure (7).

9. Dispositif d'obturation (1) selon la revendication 7 en combinaison avec la revendication 3, **caractérisé en ce que** l'organe de liaison est une liaison pivot-glissière entre la manivelle (120) et l'extrémité d'une tige (70) de l'élément suspendu (7), ladite extrémité de la tige (70) comportant une glissière (124) s'étendant dans un plan perpendiculaire à l'axe de rotation de l'arbre (9a, 9b).

10. Dispositif d'obturation (1) selon l'une quelconque des revendications précédentes, **caractérisé en ce que** le cadre support (3) comporte une pluralité d'orifices traversants en forme de polygone régulier, les ensembles d'obturation (5) comportant un volet (50) triangulaire par côté desdits orifices traversants.

## Patentansprüche

1. Vorrichtung zum Abdichten (1) eines Lufteinlasses eines Kraftfahrzeugs, wobei die Abdichtungsvorrichtung (1) einen Tragrahmen (3) umfasst, der eine Vorderseite (3a), die dazu bestimmt ist, einem eintretenden Luftstrom ausgesetzt zu sein, und eine zu der Vorderseite (3a) entgegengesetzte Rückseite (3b) umfasst, wobei der Tragrahmen (3) mindestens eine Durchgangsöffnung umfasst, wobei jede Durchgangsöffnung eine Abdichtungsanordnung (5) umfasst, die mindestens zwei Klappen (50) umfasst, die zusammenwirken und jeweils um eine jeweilige Schwenkachse (51) zwischen einer Abdichtungsstellung, in der die Durchgangsöffnung durch das Zusammenwirken der mindestens zwei Klappen (50) abgedichtet ist, und einer Öffnungsstellung, in der der eintretende Luftstrom die Durchgangsöffnung durchqueren kann, beweglich sind, wobei sich die Klappen (50) so öffnen, dass sie in der Öffnungsstellung von der Rückseite (3b) des Tragrahmens (3) vorstehen,
wobei die Abdichtungsvorrichtung (1) ferner ein System zum synchronen Öffnen der Klappen (50) umfasst,
**dadurch gekennzeichnet, dass** das Öffnungssystem Folgendes umfasst:
- ein aufgehängtes Element (7), das auf der Rückseite (3b) des Tragrahmens (3) angeordnet ist und zwischen einer dem Tragrahmen (3) angenäherten Stellung und einer von dem Tragrahmen (3) entfernten Stellung beweglich ist, wobei das aufgehängte Element (7) mit jeder der Klappen (50) verbunden ist, sodass sich die Klappen (50) in der angenäherten Stellung in der Abdichtungsstellung befinden und sich die Klappen (50) in der entfernten Stellung in der Öffnungsstellung befinden,
- eine Betätigungsvorrichtung, die dazu konfiguriert ist, das aufgehängte Element (7) zwischen der angenäherten Stellung und der zweiten entfernten Stellung zu verschieben.

2. Abdichtungsvorrichtung (1) nach Anspruch 1, **dadurch gekennzeichnet, dass** das Öffnungssystem der Klappen (50) mindestens eine Führungsvorrichtung (13) umfasst, um das aufgehängte Element (7) zwischen seiner in Bezug auf den Tragrahmen (3) angenäherten Stellung und entfernten Stellung translatorisch zu führen.

3. Abdichtungsvorrichtung (1) nach dem vorhergehenden Anspruch, **dadurch gekennzeichnet, dass** die Führungsvorrichtung (13) Folgendes umfasst:
- ein hohles Organ (32), das an dem Tragrahmen (3) angeordnet ist, wobei sich der Hohlraum des Organs (32) entlang einer Achse erstreckt, die zu der Bewegung des aufgehängten Elements (7) parallel ist, und
- einen Führungsschaft (70), der in das hohle Organ (32) eingeführt ist, um in dem hohlen Organ (32) gleiten zu können, und von dem ein Ende mit dem aufgehängten Element (7) verbunden ist.

4. Abdichtungsvorrichtung (1) nach einem der vorhergehenden Ansprüche, **dadurch gekennzeichnet, dass** die Verbindung zwischen dem aufgehängten Element (7) und einer Klappe (50) eine Verbindungsstange (130) umfasst, die an einem ersten Ende durch eine Schwenkverbindung (52) an der Klappe (50) befestigt ist und an einem zweiten Ende durch eine weitere Schwenkverbindung (72) an dem aufgehängten Element (7) befestigt ist.

5. Abdichtungsvorrichtung (1) nach einem der Ansprüche 1 bis 4, **dadurch gekennzeichnet, dass** die Betätigungsvorrichtung Folgendes umfasst:
- mindestens eine erste Welle (9a), die auf der Rückseite (3b) des Tragrahmens (3) auf einer ersten Seite der mindestens einen Abdichtungsanordnung (5) angeordnet ist, wobei die mindestens eine erste Welle (9a) mit einem Betätiger (10) verbunden ist, um sie in Drehung zu versetzen,
- mindestens eine zweite Welle (9b), die auf der Rückseite (3b) des Tragrahmens (3) auf einer zweiten Seite der mindestens einen Abdichtungsanordnung (5), die zu der ersten Seite entgegengesetzt ist, angeordnet ist,
- mindestens ein Mittel zur Übertragung (11) der Drehung der ersten Welle (9a) auf die zweite Welle (9b),
- mindestens ein Mittel zum Umwandeln (12) der Drehung der ersten (9a) und der zweiten (9b) Welle in eine translatorische Bewegung des aufgehängten Elements (7).

6. Abdichtungsvorrichtung (1) nach Anspruch 5, **dadurch gekennzeichnet, dass** das Mittel zur Übertragung (11) der Drehung der ersten Welle (9a) auf die zweite Welle (9b) einen ersten Hebelarm (91a), der durch die erste Welle (9a) getragen wird, und einen zweiten Hebelarm (91b), der durch die zweite Welle (9b) getragen wird, umfasst, wobei die Enden des ersten (91a) und des zweiten (91b) Hebelarms durch eine Stange (112) miteinander verbunden sind.

7. Abdichtungsvorrichtung (1) nach einem der Ansprüche 5 oder 6, **dadurch gekennzeichnet, dass** das Mittel zum Umwandeln (12) der Drehung der ersten (9a) und der zweiten (9b) Welle in eine translatorische Bewegung des aufgehängten Elements (7) Folgendes umfasst:
- eine Kurbel (120), die durch eine von der ersten (9a) oder der zweiten (9b) Welle getragen wird,
- ein Verbindungsorgan, das an einem seiner Enden mit dem aufgehängten Element (7) verbunden ist und an seinem entgegengesetzten Ende mit der Kurbel (120) verbunden ist.

8. Abdichtungsvorrichtung (1) nach Anspruch 7, **dadurch gekennzeichnet, dass** das Verbindungsorgan eine Stange (125) ist, die eine gelenkige Verbindung zu der Kurbel (120) und eine gelenkige Verbindung (123) zu dem Strukturelement (7) umfasst.

9. Abdichtungsvorrichtung (1) nach Anspruch 7 in Kombination mit Anspruch 3, **dadurch gekennzeichnet, dass** das Verbindungsorgan eine Schwenk- und Gleitverbindung zwischen der Kurbel (120) und dem Ende eines Schafts (70) des aufgehängten Elements (7) ist, wobei das Ende des Schafts (70) eine Gleitführung (124) umfasst, die sich in einer zu der Drehachse der Welle (9a, 9b) senkrechten Ebene erstreckt.

10. Abdichtungsvorrichtung (1) nach einem der vorhergehenden Ansprüche, **dadurch gekennzeichnet, dass** der Tragrahmen (3) eine Vielzahl von Durchgangsöffnungen in Form eines regelmäßigen Vielecks umfasst, wobei die Abdichtungsanordnungen (5) eine dreieckige Klappe (50) pro Seite der Durchgangsöffnungen umfassen.

## Claims

1. Device (1) for sealing an air inlet of a motor vehicle, said sealing device (1) comprising a support frame (3) comprising a front face (3a), suitable for being exposed to an incoming air flow, and a rear face (3b) opposite the front face (3a), said support frame (3) comprising at least one through-orifice, each through-orifice comprising a sealing assembly (5) comprising at least two complementary flaps (50) that are each movable about a respective pivot pin (51) between a sealed position, in which the through-orifice is sealed by complementarity of the at least two flaps (50), and an open position, in which the incoming air flow can pass through the through-orifice, the flaps (50) opening so that they protrude from the rear face (3b) of the support frame (3) in the open position,
the sealing device (1) further comprising a system for synchronous opening of the flaps (50),
**characterized in that** said opening system comprises:
- a suspended element (7) arranged on the rear face (3b) of the support frame (3) and movable between a position close to the support frame (3) and a position distant from the support frame (3), said suspended element (7) being connected to each of the flaps (50) so that in the close position, the flaps (50) are in the sealed position, and in the distant position, the flaps (50) are in the open position,
- an actuation device configured to move the suspended element (7) between the close position and the second, distant position.

2. Sealing device (1) according to Claim 1, **characterized in that** the system for opening the flaps (50) comprises at least one guide device (13) for guiding the translation of the suspended element (7) between its position close to and its position distant from the support frame (3).

3. Sealing device (1) according to the preceding claim, **characterized in that** the guide device (13) comprises:
- a hollow member (32) arranged on the support frame (3), the hollow of said member (32) extending along an axis parallel to the movement of the suspended element (7), and
- a guide rod (70) inserted into the hollow member (32) so that it can slide in said hollow member (32) and one end of which is connected to the suspended element (7).

4. Sealing device (1) according to any one of the preceding claims, **characterized in that** the connection between the suspended element (7) and a flap (50) comprises a connecting rod (130) fastened at a first end to the flap (50) by a pivot connection (52) and fastened at a second end to the suspended element (7) by another pivot connection (72).

5. Sealing device (1) according to any one of Claims 1 to 4, **characterized in that** the actuation device comprises:
- at least one first shaft (9a) arranged on the rear face (3b) of the support frame (3) on a first side of the at least one sealing assembly (5), said at least one first shaft (9a) being connected to an actuator (10) so that it can be rotated,
- at least one second shaft (9b) arranged on the rear face (3b) of the support frame (3) on a second side of the at least one sealing assembly (5), opposite the first side,
- at least one means (11) for transmitting the rotation of the first shaft (9a) to the second shaft (9b),
- at least one means (12) for converting the rotation of the first and second shafts (9a, 9b) into the translation of the suspended element (7).

6. Sealing device (1) according to Claim 5, **characterized in that** the means (11) for transmitting the rotation of the first shaft (9a) to the second shaft (9b) comprises a first lever arm (91a) borne by the first shaft (9a) and a second lever arm (91b) borne by the second shaft (9b), the ends of the first and second lever arms (91a, 91b) being connected to each other by a connecting rod (112).

7. Sealing device (1) according to any one of Claims 5 and 6, **characterized in that** the means (12) for converting the rotation of the first and second shafts (9a, 9b) into the translation of the suspended element (7) comprises:
- a crank (120) borne by one of the first or second shafts (9a, 9b),
- a connecting member connected at one of its ends to the suspended element (7) and connected to the crank (120) at its opposite end.

8. Sealing device (1) according to Claim 7, **characterized in that** the connecting member is a connecting rod (125) comprising an articulated connection with the crank (120) and an articulated connection (123) with the structural element (7).

9. Sealing device (1) according to Claim 7 in combination with Claim 3, **characterized in that** the connecting member is a sliding pivot connection between the crank (120) and the end of a rod (70) of the suspended element (7), said end of the rod (70) comprising a slider (124) extending in a plane perpendicular to the axis of rotation of the shaft (9a, 9b).

10. Sealing device (1) according to any one of the preceding claims, **characterized in that** the support frame (3) comprises a plurality of through-orifices in the shape of a regular polygon, the sealing assemblies (5) comprising one triangular flap (50) per side of said through-orifices.
